# EUROPEAN PATENT APPLICATION

(11) **EP 1 372 329 A1**
(43) Date of publication of application: **17.12.2003**
(21) Application number: 02360170.1
(22) Date of filing: 11.06.2002
(51) Int. Cl.: H04M 11/06, H04L 12/28, H04L 12/56

(54) **Cordless telephony profile**

(71) Applicant: ALCATEL, 75008 Paris (FR)
(72) Inventor: Jeannerod, Laurent, F-67205 Oberhausbergen (FR)
(74) Representative: Rausch, Gabriele, Dr.

(57) **Abstract**

It is suggested to add some set of AT or Hayes commands for performing a wireless telecommunications between two terminals. This is advantageously adapted for controlling some mobile man machine interface among other when said wireless telecommunications will be supported over a Bluetooth radio link. It will then enable to support telephony over Bluetooth with very limited modifications in Serial Port Profile SPP. An implementation on PDA open platform is particularly easy.

## Description

### Technical Field

The present invention relates to a method for performing a wireless telecommunications between two terminals. Furthermore, it is related to a terminal with which such wireless telecommunications can be performed. Additionally, it is related to a gateway to be connected to some enterprise or external network and with which such wireless telecommunications can be performed.

### Background of the invention

In the last years, the interest to overcome the problem of cabling grew among other due to the high mobility of the people and the increasing number of different terminals to be used like an Internet Protocol based telephone, a smart computer, a Personal Digital Assistant, a smart mobile phone. Some protocol were setup to allow a wireless transfer of data between these different terminals. There, short communications appeared the most reliable and is used for many purposes. A growing trend for short-range communication usage is Personal Area Network PAN devices and applications. And to optimize the comfort among other during mobility, the development seems to go towards the "all in one handset" including personal data devices. Such type of handset supports standard cellular communication, and also has the ability to communicate with PAN devices that are in its near vicinity, using short-range communication.

The "Bluetooth" standard is a short-range wireless communication standard that has many uses for voice applications and telephony (e.g. cordless phone, wireless headsets) and also for data synchronization (laptop to personal computer communication, wireless local area network Gateways etc.). The Bluetooth wireless technology operates using Gaussian Frequency Shift Keying (GFSK) modulation combined with frequency hopping (1600 hops per seconds) to lessen interference. The nominal link is 10m and the gross data rate is 1Mbps. Bluetooth radios will operate in a picocell topology in the 2,4 GHz range of the unlicensed ISM (Industrial, Scientific and Medical) spectrum; the gross data rate is 1 Mbps. The Bluetooth baseband technology will support both SCO (Synchronous Connection Oriented) links for voice and AC (Asynchronous Connectionless) links for packet data.

But the Cordless Telephony Profile defined in Bluetooth standard is too complex. It is based on Q931 (in a functional approach) upper L2CAP layer (Logical Link layer Control and Adaptation Protocol). It enables to support a basic telephony service: incoming and outgoing call and a very limited set of supplementary services like calling line identity, Dual Tone Multi-Frequency, register recall.

### Summary of the invention

It is an object of the present invention to provide a possibility of a wireless telecommunication using the already existing techniques without developing to new characteristics.

This object is attained by a method for performing a wireless telecommunications between two terminals as claimed in claim 1. Furthermore, the invention provides a terminal according to claim 7. Additionally, it provides a gateway according to claim 9.

It is suggested to add some set of AT or Hayes commands for performing a wireless telecommunications between two terminals. This is advantageously adapted for controlling some mobile man machine interface among other when said wireless telecommunications will be supported over a Bluetooth radio link. It will then enable to support telephony over Bluetooth with very limited modifications in Serial Port Profile SPP. An implementation on PDA open platform is particularly easy.

Further advantageous features of the invention are defined in the dependent claims and will become apparent from the following description and the drawing.

### Brief description of the drawings

One embodiment of the invention will now be explained in more detail with reference to the accompanying drawing, in which:
Figure 1 is an architecture overview with a scheme of a wireless telecommunications according to the present invention;
Figure 2 is a diagram of an incoming call for a terminal according to the present invention;
Figure 3 is a diagram of an outgoing call for a terminal according to the present invention.

### Detailed description of preferred embodiments

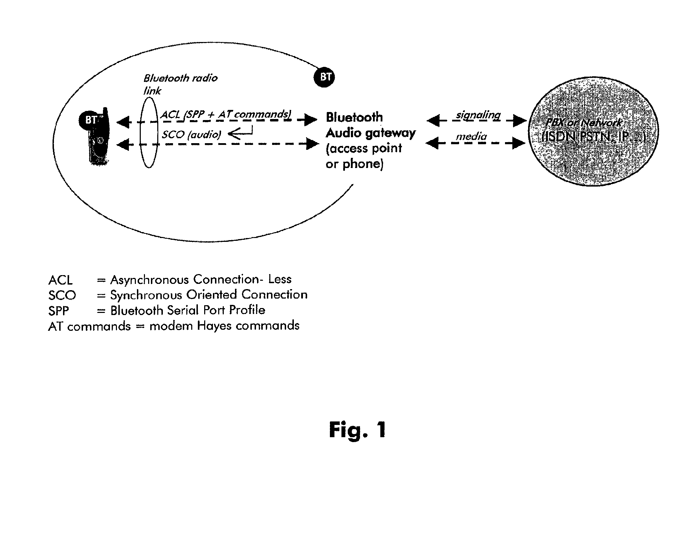

On figure 1 is an architecture overview for the setup of a wireless telecommunications over Bluetooth radio link. The fact that here Bluetooth is shown is not restrictive. Another protocol could have been used. In this example, the method to perform a wireless telecommunications according to the present invention is applied on a protocol between a mobile and a Bluetooth audio gateway. It relies on SPP defined in Bluetooth standard 1.1. The telecommunications is setup between one dual mode Bluetooth/GSM mobile and one Bluetooth audio gateway.

More generally, a wireless telecommunications between two terminals (on fig. 1 the mobile and the gateway) is performed by using their respective serial port profile SPP and a protocol for the transmission of said telecommunications based on AT or Hayes commands. Said protocol will be also applied for the audio channel of said telecommunications.

The terminal (mobile phone on fig. 1) comprises at least a modem supporting a serial port profile, and a processor on which AT or Hayes commands can be performed to build a wireless telecommunications with another terminal (gateway on fig. 1). Latter can be connected to some enterprise network like a Private Branch Exchange PBX or directly to some external network (ISDN, PSTN, IP based one like a LAN). The gateway comprises at least a serial port profile, a modem and a processor on which AT or Hayes commands can be performed to build a wireless telecommunications with said terminal (mobile) while said gateway will take in charge at least some interface management of said terminal. Typically, the gateway takes in charge inter-working with PBX or network as well as the mobile man machine interface at least when associated to a telecommunications.

When mobile terminal is located inside Bluetooth coverage area of an access point e.g. the gateway, access point makes setup of one Bluetooth serial port profile with the mobile and takes control of mobile man machine interface.

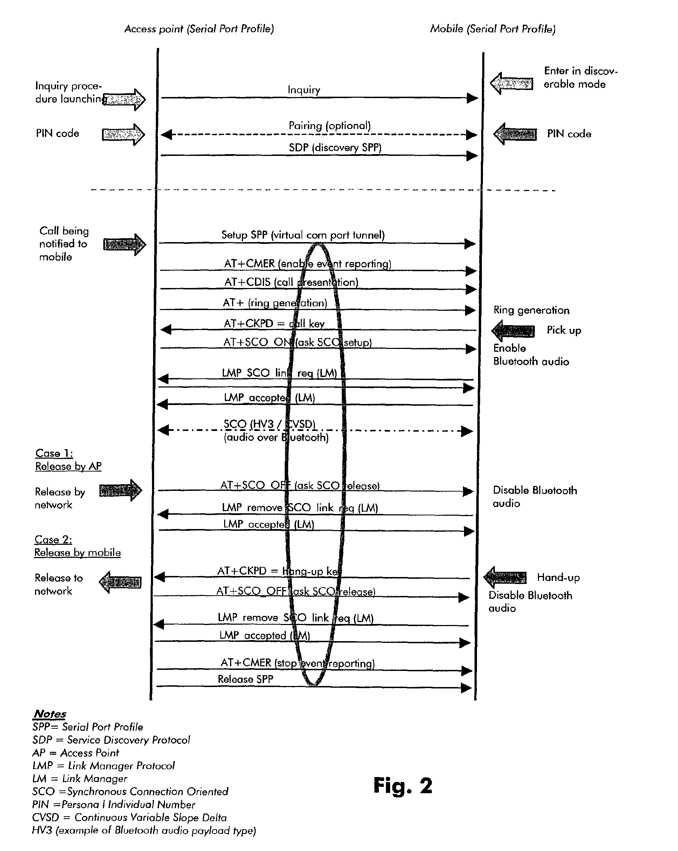

On figure 2 is shown a diagram of the steps followed by the present method when an incoming call for the mobile is setup. When access point wants to page mobile, it sends a few AT commands to notify the mobile of Bluetooth incoming call with a ring and specific messages to display. During communication, dedicated action or notification are under control of access point. On figure 2 is shown two situations for a telecommunications release. In case 1, the release is initiated by the network on an event coming from the network. Access point (gateway) asks to the mobile to release Synchronous Connection Orientated SCO channel. Mobile translates this message on Link Manager layer. Then, access point signals to mobile display, end of call. In case 2, release is initiated by mobile using hang-up key. When mobile leaves Bluetooth coverage, Serial port profile is closed.

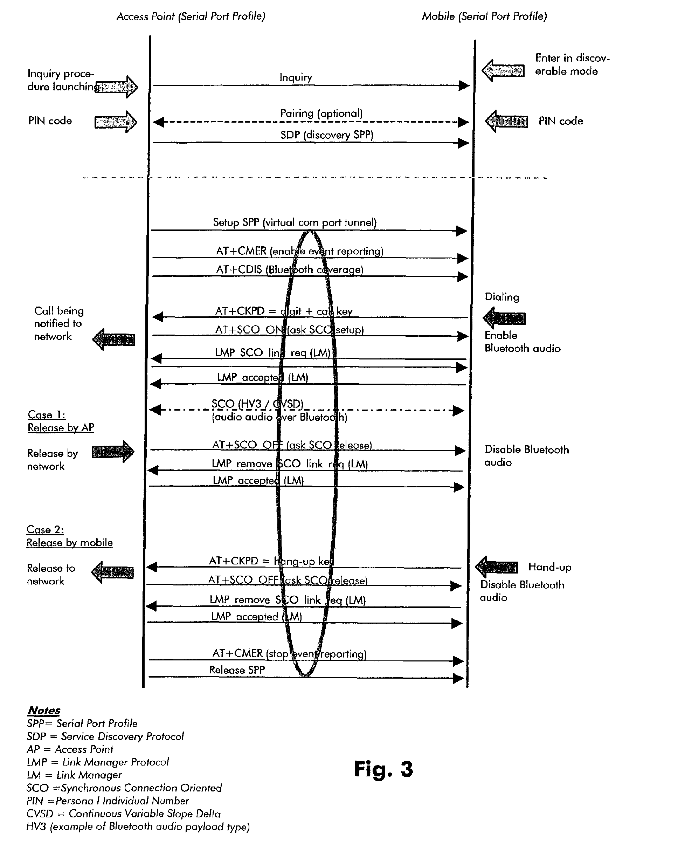

On figure 3 is shown a diagram of the steps followed by the present method when an outgoing call for the mobile is setup. When access point (gateway) wants to page mobile, it sends a few AT commands to notify the mobile of Bluetooth notification are under control of access point. On figure 3 is shown two situations for telecommunications release. In case 1, release is initiated by network on an event coming from network. Access point asks to mobile to release SCO channel. Mobile translates this message on Link Manager layer. Then, access point signals to mobile display, end of call. In case 2, release is initiated by mobile using hang-up key. When mobile leaves Bluetooth coverage, Serial port profile is closed.

Some supplementary services can be advantageously offered using the present method. When mobile is located in the Bluetooth coverage area of the gateway, the gateway or access point makes setup of one Bluetooth serial port profile with the mobile and takes control of mobile man machine interface. Gateway signals on mobile display that it can be managed by Bluetooth infrastructure. When using man machine interface remote function over Bluetooth, it is possible to manage supplementary services of PBX on mobile side. When no telecommunications is setup dial by name feature can be supported. When a telecommunications is active, conference or call transfer can be supported.

Since there is a lot of services that can be accessed or controlled by AT or Hayes commands, the present approach enables to benefit for them without to much modification. Furthermore, it allows to control audio easily inside every AT commands application or script. It gives a possibility to use GSM kind of mobile phone in a enterprise (business) environment managed by e.g. a PBX or a IP-server mapping a classical PBX.

## Claims

1. Method for performing a wireless telecommunications between two terminals
- using the respective serial port profile of the terminals and
- applying a protocol for the transmission of said wireless telecommunications based on AT- or Hayes- commands.

2. Method according to claim 1, applying said protocol to an audio channel of said wireless telecommunications.

3. Method according claim 1, applying said protocol to a service channel of said wireless telecommunications

4. Method according to claim 1, **characterized in, that** at least one of these two terminals is a gateway such that an incoming telecommunications will reach said gateway to be transmitted to said other terminal being dialed via said wireless telecommunications and an outgoing telecommunications will be activated by said other terminal and transmitted via said wireless telecommunications towards said gateway to be further transmitted.

5. Method according to claim 3, **characterized in, that** said gateway is connected to some external or enterprise network and will take in charge inter-working with said network.

6. Method according to claim 3, **characterized in, that** said gateway will take in charge at least some interface management of said other terminal.

7. Method according to claim 1, **characterized in, that** said serial port profile is the Bluetooth serial Port profile while said wireless telecommunications is supported over a Bluetooth radio link.

8. Terminal comprising at least a modem supporting a serial port profile, and a processor on which AT- or Hayes- commands can be performed to build a wireless telecommunications with another terminal.

9. Terminal according to claim 7, **characterized in, that** it is a Bluetooth mobile terminal.

10. Gateway to be connected to some enterprise or external network and comprising at least a serial port profile, a modem and a processor on which AT or Hayes commands can be performed to build a wireless telecommunications with a terminal while said gateway will take in charge at least some interface management of said terminal.

11. Gateway according to claim 9, **characterized in, that** said serial port profile is a Bluetooth serial Port profile while said wireless telecommunications is supported over a Bluetooth radio link.
